# EUROPEAN PATENT SPECIFICATION

(11) **EP 0 822 712 B1**
(45) Date of publication and mention of the grant of the patent: **18.02.2004**
(21) Application number: 97305607.0
(22) Date of filing: 25.07.1997
(51) Int. Cl.: H04N 5/445

(54) **Method and apparatus for the inputting of control information for operating an audiovisual apparatus**
Verfahren und Vorrichtung zur Eingabe von Steuerinformation für ein audio-visuelles Gerät
Procédé et dispositif d'entrée d'information pour la commande du fonctionnement d'un dispositif audiovisuel

(30) Priority: 29.07.1996 JP 19866196
(43) Date of publication of application: 04.02.1998
(73) Proprietor: MITSUBISHI DENKI KABUSHIKI KAISHA, Tokyo 100 (JP)
(72) Inventor: Sugano, Tetsuo, Mitsubishi Elec. Eng. Co., Ltd, Chiyoda-ku, Tokyo 100 (JP); Nakagawa, Sataoaki, Mitsubishi Elec. Eng. Co., Ltd, Chiyoda-ku, Tokyo 100 (JP)
(74) Representative: Burke, Steven David

(56) References cited:
- EP-A- 0 115 145
- US-A- 4 641 205
- US-A- 5 373 330

## Description

### BACKGROUND OF THE INVENTION

The present invention relates to a method of inputting the control information for operating television sets, VTRs, and other audiovisual apparatus, especially the control information for recording, and an input apparatus implementing the method.

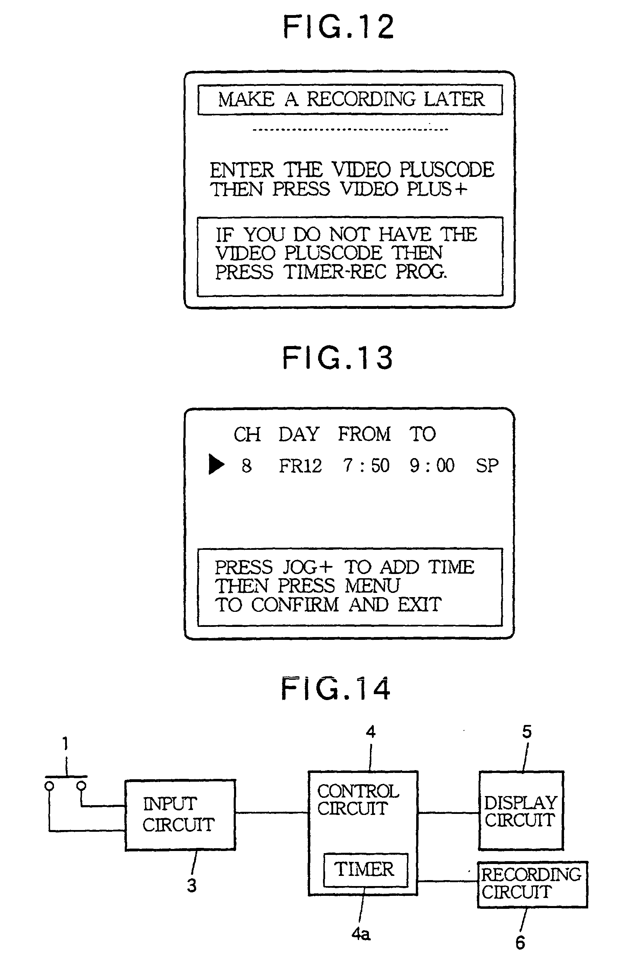

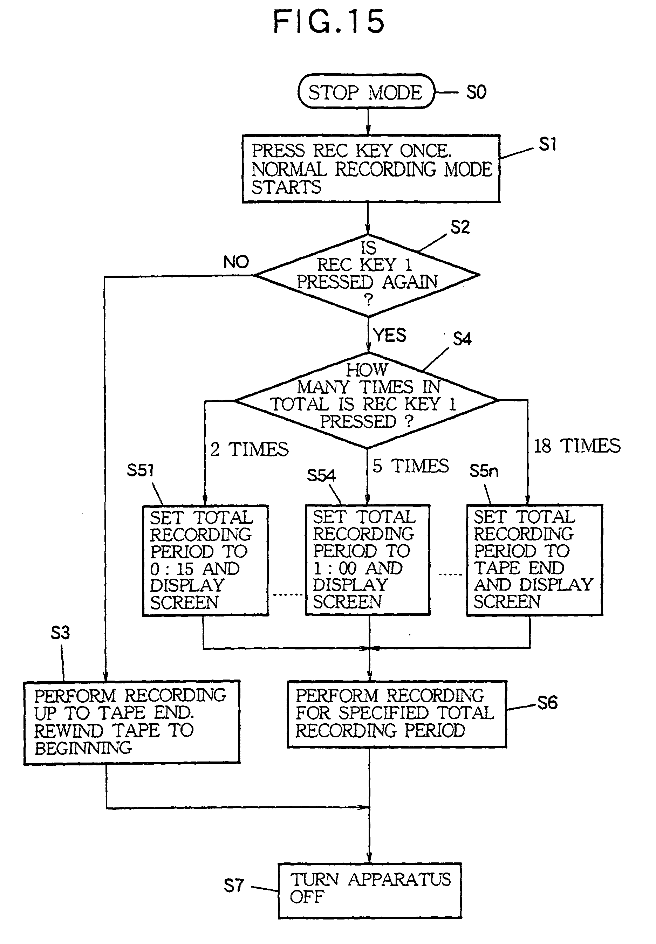

Fig. 14 is a block diagram showing the input apparatus included in the conventional magnetic recording/reproducing apparatus (VTR). Fig. 15 is a flowchart showing the key input procedure for performing recording by means of the one touch recording (referred to below as OTR) function provided for the VTR.

As shown in Fig. 14, the REC key (record key) 1 is connected to an input circuit 3. The input circuit 3 is connected to a display circuit 5 and a recording circuit 6 via a control circuit 4. The control circuit 4 contains a timer circuit 4a.

The OTR function starts a normal recording mode (mode in which recording is started without setting the recording end time) when the REC key 1 is pressed just once, specifies a period up to the end of recording according to the number of times the REC key 1 is pressed, and automatically turns the power off after the recording is performed for the specified period.

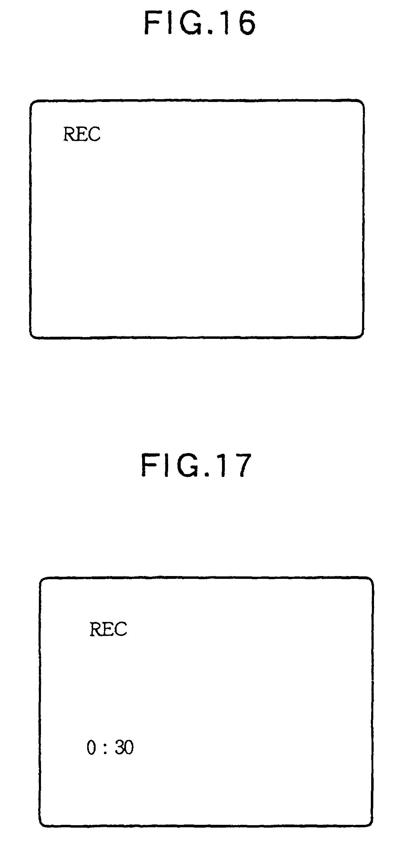

With reference to Fig. 15, the key operation procedure in the normal recording mode or the recording mode using the OTR function will next be described. When the user presses the REC key 1 in the state in which the stop mode is set (step S0), a record command is input through the input circuit 3 to the control circuit 4. The control circuit 4 controls the recording circuit 6 to start recording (step S1). Meanwhile, the control circuit 4 controls the display circuit 5 to display characters "REC" on the screen, as shown in Fig. 16. If the user does not press the REC key 1 after that, step S3 is performed, by which the recording circuit 6 continues recording until the end of the tape, and the tape is then rewound to the beginning.

When the user performs recording by means of the OTR function, that is, when the user wants to set a recording period, the user presses the REC key 1 once, then presses the REC key 1 one or more times (step S2). Next, in step S4, a command signal depending on the number of times the REC key 1 is pressed after the beginning of recording is input through the input circuit 3 to the control circuit 4. The control circuit 4 recognizes the command signal as the information setting a total recording period from the beginning to the end of recording. The recording period is set in the timer circuit 4a of the control circuit 4 in 15-minute increments, for example, and the display circuit 5 sets, for instance, a screen displaying the recording period (0:30, for example), as shown in Fig. 17 (steps S51 to S5n). The recording period is measured by the timer circuit 4a. The recording circuit 6 performs recording for the specified recording period (step S6), and the power to the VTR is then turned off (step S7).

As described above, many television sets, VTRs, and other audiovisual apparatus are so configured that the control information for setting functions such as OTR, which was described above, is input just by a key operation. Generally, the audiovisual apparatus is designed to facilitate operation with a smaller number of keys. To execute a function, users unfamiliar with the key operation for setting functions must learn the input method with an operating manual beforehand.

With the conventional input apparatus, the key operation for executing the OTR function is very simple for users who have learned the operating procedure, as described above, but looks complex and is difficult for novice users. In addition, there is some danger that unintentional control information might be input through the key operation.

Granted US patent 4 641 205 and published European patent application EP-A-0115145 disclose VTR's which display information to a user to assist the user in the operation of the VTR.

### SUMMARY OF THE INVENTION

An object of the invention is to provide an input method and an input apparatus which offer a plurality of input procedures for a single function, and which is therefore convenient for both users accustomed to the key operation and users unfamiliar with the key operation.

Aspects of the invention are provided in the accompanying claims.

### BRIEF DESCRIPTION OF THE DRAWINGS

Fig. 1 is a block diagram showing the input apparatus of in a magnetic recording/reproducing apparatus the first embodiment of the present invention.
Fig. 2 is a front view of a remote controller, which is an example of the input means.
Fig. 3 is a flowchart of the procedure for inputting a record setting command to a magnetic recording/reproducing apparatus.
Fig. 4 shows the menu screen displaying the operation guide.
Fig. 5 shows the menu screen for setting a channel number.
Fig. 6 shows the menu screen for setting a recording period.
Fig. 7 shows the recording setting confirmation screen.
Fig. 8 is a block diagram showing the input apparatus in a magnetic recording/reproducing apparatus of the second embodiment of the present invention.
Fig. 9 is a block diagram showing the input apparatus in a magnetic recording/reproducing apparatus the third embodiment of the present invention.
Fig. 10 shows a screen explaining an input procedure different from the procedure for setting recording by means of the remote'controller in the fourth embodiment of the present invention.
Fig. 11 is a flowchart showing the procedure for inputting a command to set programmed recording in the fifth embodiment of the present invention.
Fig. 12 shows the menu screen for "recording programming".
Fig. 13 shows the "recording period confirmation" screen.
Fig. 14 is a block diagram showing the input apparatus included in the conventional magnetic recording/reproducing apparatus (VTR).
Fig. 15 is a flowchart showing the key input procedure for recording by the OTR function.
Fig. 16 shows the screen displayed after the REC key is pressed.
Fig. 17 shows the screen displayed while a recording period is being set.

### DETAILED DESCRIPTION OF THE PREFERRED EMBODIMENTS

Embodiments of the present invention will next be described with reference to appended drawings.

### Embodiment 1

A first embodiment of the input apparatus is applied to a magnetic recording/reproducing apparatus (VTR) connected with a television receiver.

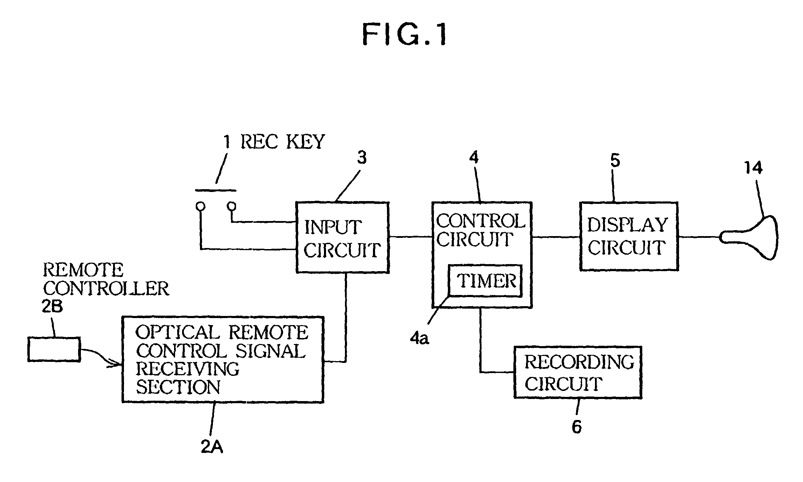

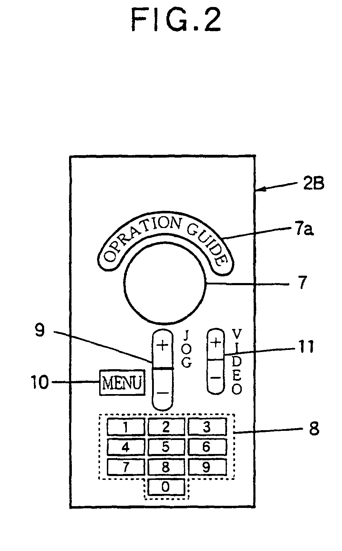

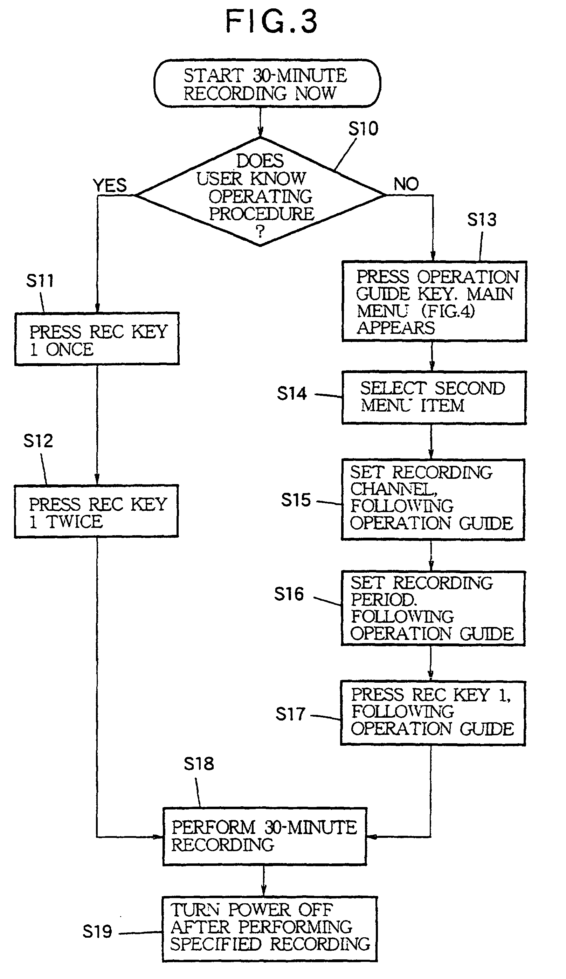

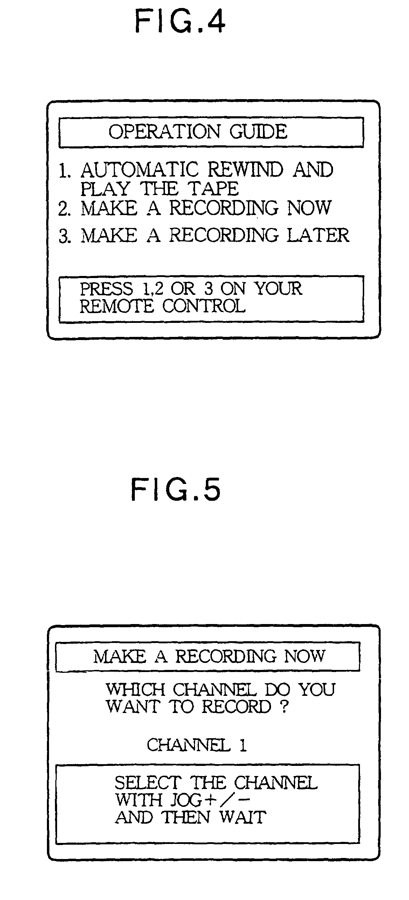

Fig. 1 is a block diagram showing the input apparatus in the magnetic recording/reproducing apparatus, and Fig. 2 is a front view of a remote controller, which is an example of the input means. Fig. 3 is a flowchart showing the procedures for inputting a record setting command into the magnetic recording/reproducing apparatus, and Figs. 4, 5, 6, and 7 show menu screens displaying an operation guide and the like.

As shown in Fig. 1, a REC key (record key) 1 and optical remote control signal receiving section 2A are connected to an input circuit 3. The input circuit 3 is connected to a display circuit 5 and a recording circuit 6 via a control circuit 4. The optical remote control signal receiving section 2A receives an infrared signal from a remote controller 2B, which is shown in Fig. 2, and outputs a record command signal to the input circuit 3. The control circuit 4 has a timer circuit 4a.

As shown in Fig. 2, the remote controller 2B has a round operation guide key 7 almost at its center, which can be easily recognized by the user, and the characters "Operation Guide" 7a are provided atop the key 7. In the lower part of (the front surface of) the remote controller 2B, a numeric keypad 8 for digits 0 to 9 is disposed. A selection keys (JOG keys) 9, a menu key 10, and VIDEO PLUS keys 11 are disposed between the operation guide key 7 and the numeric keypad 8.

The procedure for setting the VTR to perform recording by means of the input apparatus described above will next be described.

Suppose, for example, that the user wants to immediately starts a 30-minute recording of a TV program the user is watching. As shown in Fig. 3, if the user knows the corresponding operating procedure (step S10), the user presses the REC key 1 once (step S11), which selects the recording mode, then presses the REC key 1 twice (step S12), which sets a recording period of 30 minutes. The operation of steps S11 and S12 is for recording by means of the conventional OTR function, and the corresponding key operation is very simple for the user accustomed to the operation for setting recording.

If the user is not familiar with the operation for setting recording, the user will press the operation guide key 7 disposed on the remote controller 2B (step S13), guided by the characters "Operation Guide" 7a on the remote controller 2B. When the operation guide key 7 is pressed, the remote controller 2B transfers a command to the optical remote control signal receiving section 2A, and the command is input through the input circuit 3 to the control circuit 4 as an operation guide command. The control circuit 4 controls the display circuit 5 to display the main menu screen (operation guide screen), as shown in Fig. 4, on the screen of a monitor 14 of the television receiver connected to the VTR, for instance.

The operation guide screen shown in Fig. 4 displays three guide items. The first item is AUTOMATIC REWIND AND PLAY THE TAPE, which is the function for rewinding the tape automatically and performing playback. The second item is MAKE A RECORDING NOW, which is the function to start recording immediately. The third item is MAKE A RECORDING LATER, which is the function for performing programmed or preset recording. With reference to the on-screen guide, the user can select a function by specifying the corresponding item by means of the numeric keypad 8 of the remote controller 2B. The MAKE A RECORDING NOW function of the second item is a recording setting function equivalent to the OTR function provided by the conventional magnetic recording/reproducing apparatus, as will be described later.

The user can select the second item MAKE A RECORDING NOW, following the instructions given on the main menu screen, which is displayed on the screen of the monitor 14 of the television receiver by the display circuit 5 (step S14). The item selection is performed by pressing the "2" key of the numeric keypad 8 on the remote controller 2B. The item selection command is transferred from the remote controller 2B to the optical remote control signal receiving section 2A, then input through the input circuit 3 to the control circuit 4 as the item selection information. The control circuit 4 controls the display circuit 5 so that the the displayed screen is changed to the menu screen for setting a recording channel (channel number setting screen), as shown in Fig. 5. The channel number setting screen prompts the user to specify a desired recording channel with a displayed remark "WHICH CHANNEL DO YOU WANT TO RECORD? " The user can set the number of the desired recording channel by pressing the JOG key 9 (step S15).

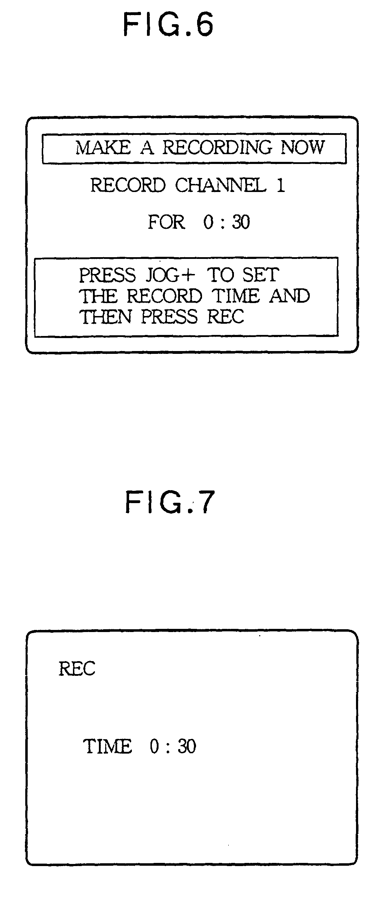

If the user does not operate the JOG key 9 while the channel number setting screen is being displayed, the control circuit 4 recognizes after a certain period of time, for example, 8 seconds from when the screen appears, that nothing is input, according to the time measurement by the timer circuit 4a, automatically sets the channel currently selected, and switches the screen to the menu screen for specifying a recording period (recording period setting screen), as shown in Fig. 6. If a channel number is input within the period of 8 seconds by means of the JOG key 9, the next recording period setting screen appears a certain time, e.g., 4 seconds later under the control of the timer circuit 4a.

As has been described above, the user can go to the next step earlier by selecting a channel number than by automatic selection. The wait period for input has been set to 8 seconds on the assumption that the user would be able to read and understand the operation guide within that period. The wait period of 4 seconds has been determined on the assumption that the user can check the channel number and the like after the input within that period.

As shown in Fig. 6, the recording period setting screen indicates the recording channel selected on the previous menu screen (channel 1 in this example) and displays the key operation for setting a recording period. On this screen, the recording period is set by operating the JOG keys 9 of the remote controller 2B in the same way as the channel number is set. When a selection command is sent from the remote controller 2B through the optical remote control signal receiving section 2A and input circuit 3 to the control circuit 4, the desired recording period is set to the timer circuit 4b in the control circuit 4. When specifying a desired recording period (step S16), a total of 17 options are given, for example: The 16 options are multiples of a 15-minute period up to 4 hours such as 0:15 and 0:30, which are selected in ascending order each time the JOG key 9 is pressed; The remaining one option is a period up to the tape end. When the user presses the REC key 1 after setting the desired recording period of for example 30 minutes (step S17), the recording period is indicated on the recording setting confirmation screen, as shown in Fig. 7, and the recording circuit 6 is directed to perform the record operation (step S18). The recording setting confirmation screen displays the same contents as the screen shown in Fig. 17 and disappears a few seconds after the record operation command is made.

When the specified 30-minute recording finishes, the control circuit 4 checks that the timer circuit 4a ends the time measurement and turns off the recording circuit 6 (step S19).

With the input apparatus described above, the control information equivalent to the control information provided by the OTR function of the conventional magnetic recording/reproducing apparatus can be input to the recording circuit 6 by selecting the MAKE A RECORDING NOW function on the first menu screen. Users familiar with the recording setting by means of the OTR function of the magnetic recording/reproducing apparatus, which was described as prior art, can record a TV program for 30 minutes by pressing the REC key 1 three times. Users unfamiliar with the operation can record a program of a desired channel for a desired period without reading the operating manual, following the operation guide displayed on the operation guide screen (Fig. 4), channel number setting screen (Fig. 5), and recording period setting screen (Fig. 6), and finally reaching the recording setting confirmation screen (Fig. 7). Since the recording period is set according to the number of times the key (JOG key 9) is pressed, in the same way as that in which the OTR function is performed, the user will learn the key operation of the conventional OTR function by repeating the guided key operation and will finally learn the OTR function.

Although the input apparatus of a VTR connected to a television receiver has been described above, the present invention can be applied to a VTR-integrated-television receiver likewise.

### Embodiment 2

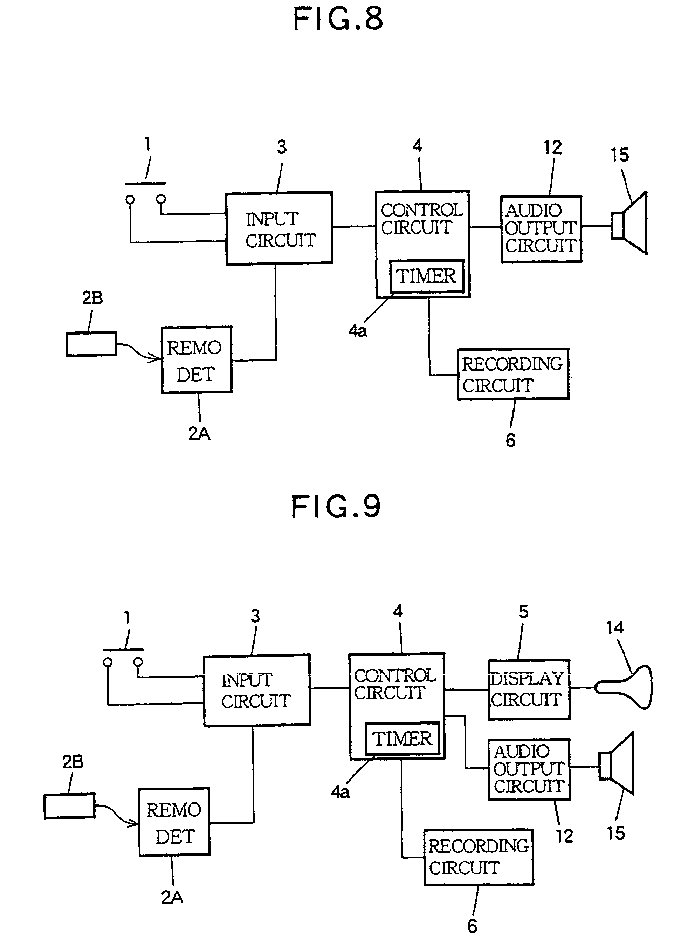

As the second embodiment, the input apparatus of the present invention applied to a magnetic recording/reproducing apparatus (VTR) will be described. Fig. 8 is a block diagram showing the input apparatus in the magnetic recording/reproducing apparatus.

As shown in Fig. 8, a REC key (record key) 1 and an optical remote control signal receiving section 2A are connected to an input circuit 3. The input circuit 3 is connected through a control circuit 4 to an audio output circuit 12 and a recording circuit 6. The optical remote control signal receiving section 2A receives an infrared signal from the remote controller 2B (Fig. 2), which was described in Embodiment 1. and outputs a record command signal to the input circuit 3. The control circuit 4 is equipped with a timer circuit 4a.

With reference to Fig. 3, the procedure for setting the VTR to perform recording by means of the input apparatus described above will next be described.

Let us assume that the user wants to start immediately a 30-minute recording of a TV program that the user is currently watching, as in the example in Embodiment 1. If the user knows the corresponding operating procedure (step S10), the user can set the recording period of 30 minutes (step S18) by pressing the REC key 1 three times (step S11), as shown in Fig. 3. If the user is unfamiliar with the operation for setting recording, the user will press the operation guide key 7 disposed on the remote controller 2B (step S13), guided by the characters "Operation Guide" 7a on the remote controller 2B. When the operation guide key 7 is pressed, the remote controller 2B transfers a command to the optical remote control signal receiving section 2A, and the command is input through the input circuit 3 to the control circuit 4 as an operation guide command.

The second embodiment of the input apparatus is different from the first embodiment in its operation in and after step S14 shown in Fig. 3. The control circuit 4 controls the audio output circuit 12 to output voice guidance such as "You are on the main menu. To watch video, press "1" on the remote controller. To start recording now, press "2". To program unattended recording, press "3".

Following the voice guidance of the main menu output from the audio output circuit 12 through a speaker 15, the user presses the "2" key of the numeric keypad 8 on the remote controller 2B. The item selection information is input through the input circuit 3 to the control circuit 4. The control circuit 4 controls the audio output circuit 12 to output next voice guidance, for example, prompting the user to specify a desired recording channel, such as "Set a recording channel. Press the JOG key of the remote controller to set the channel you want." The user can set the number of the desired recording channel by pressing the JOG key 9 (step S15).

If the user does not press any key, the channel currently set on the VTR is automatically selected after a certain period from when the voice guidance prompting the user to specify a recording channel is output, then the next voice guidance is output. As described in Embodiment 1, if the user selects a channel number, the user can go to the next step earlier than by automatic selection.

After a certain period elapses from the selection of the channel number, the control circuit 4 controls the audio output circuit 12 to output next voice guidance such as "You are recording channel 1. Set a recording period. Press the JOG key of the remote controller to set the recording period you want." With this voice guidance, the user can confirm that the recording channel (channel 1) selected under the previous voice guidance has been correctly input and can simultaneously obtain voice guidance prompting the setting of the recording period. A desired recording period can be specified by pressing the JOG key 9 of the remote controller (step S16), in the same way as in the first embodiment.

When the user presses the REC key 1 after setting the recording period of 30 minutes (step S17), the user obtains voice guidance such as "The recording period is 30 minutes," with which the user can check the recording period. At the same time, the recording circuit 6 is instructed to perform recording (step S18).

When the specified recording of 30 minutes finishes, the control circuit 4 checks that the time measurement by the timer circuit 4a ends, and turns off the recording circuit 6 (step S19).

With the input apparatus described above, VTR users unfamiliar with the operation for setting recording can perform necessary key input operation, following the instructions of voice guidance, without reading the operating manual. Those users can easily and correctly record a desired program for a desired period.

Although the input apparatus of a VTR has been described above, the present invention can also be applied to a VTR connected to a television receiver or a VTR-integrated-television receiver likewise.

### Embodiment 3

The third embodiment of the input apparatus is equipped with both the display circuit 5 of the first embodiment and the audio output circuit 12 of the second embodiment, and can be applied to a magnetic recording/reproducing apparatus (VTR) connected to a television receiver. Fig. 9 is a block diagram showing the input apparatus in the magnetic recording/reproducing apparatus.

As shown in Fig. 9, a REC key (record key) 1 and an optical remote control signal receiving section 2A are connected to an input circuit 3. The input circuit 3 is connected through a control circuit 4 to a display circuit 5, an audio output circuit 12, and a recording circuit 6. The optical remote control signal receiving section 2A receives an infrared signal from the remote controller 2B, which was described in Embodiment 1, and outputs a record command signal to the input circuit 3. The control circuit 4 has a timer circuit 4a.

The procedure for setting recording by means of this input apparatus is the same as the procedure indicated in Fig. 3 for the first and second embodiments, except that when the control information is input with reference to the guide information, both the menu screen and voice guidance are output as the operation guide in steps S14 to S17 indicated in Fig. 3. Obtaining both the displayed guide information and voice guidance, the user can record a desired program for a desired period of time with higher correctness. This system also has these effects: The user can master the key input operation earlier and can easily understand the key operation of the OTR function.

### Embodiment 4

The fourth embodiment of the input apparatus provides the user with another input procedure after the control information for setting recording and the like is input with reference to the guide information. Like the first embodiment of the input apparatus indicated in Fig. 2 or Fig. 3, the third embodiment allows a record setting command to be input into the magnetic recording/reproducing apparatus in two ways.

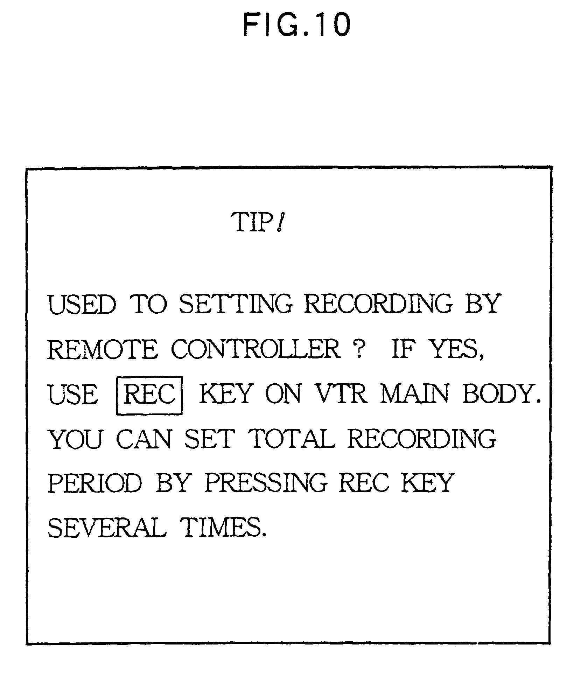

Fig. 10 shows a screen describing an input procedure different from recording setting by means of the remote controller 2B.

The description screen appears after the recording setting confirmation screen (Fig. 7) when the REC key 1 is pressed in step S17 shown in the flowchart of Fig. 3. By seeing the description screen displayed at the end of the key operation, the user can easily understand that the recording can be set by pressing the REC key 1 on the VTR main body several times in the same way as that in which the key operation of steps S13 to S17 is performed. After that, the user can choose an easier method of setting recording.

### Embodiment 5

The fifth embodiment of the input apparatus is applied to a magnetic recording/reproducing apparatus (VTR) connected to a television receiver and includes an input procedure for setting programmed recording with reference to guide information. Like the first embodiment of the input apparatus, the fifth embodiment of the input apparatus offers two procedures for setting the magnetic recording/reproducing apparatus to perform programmed recording.

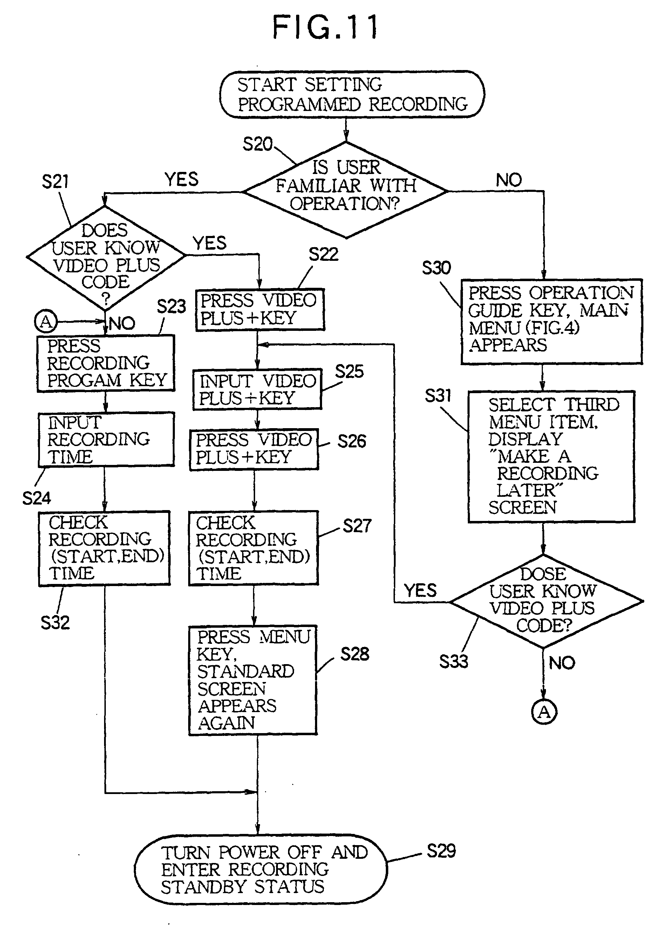

Fig. 11 is a flowchart showing the procedure for inputting a programmed recording setting command to the magnetic recording/reproducing apparatus. Fig. 12 and Fig. 13 show menu screens displaying the operation guide and the like. The configurations of the input apparatus (Fig. 1) and remote controller (Fig. 2) are the same as those in the first embodiment.

When the user wants to perform programmed recording of a TV program, the input procedure is as described below.

Suppose, for example, that the user programs the recording of a TV program broadcast from 7:50 to 9:00 on 12th, Friday. As shown in Fig. 11, the user familiar with the operating procedure therefor (step S20) goes from step S21 to either step S22 or step S23, depending on whether the user knows the VIDEO PLUS code.

The VIDEO PLUS code is a numeric code assigned to each program, with which the broadcast start time and broadcast end time of the program can be identified. The numeric codes are indicated in television broadcast schedules on television guide periodicals, newspapers, and the like. When a VIDEO PLUS code is input to a VTR or television receiver, the recording time of the program is automatically programmed.

If the user does not know the VIDEO PLUS code, the user presses the recording programming key (not shown) on the remote controller, in step S23, and then inputs the recording time (start time and end time) in step S24. The user then confirms the recording time (starting time and ending time) in step S32.

If the user knows the VIDEO PLUS code, the user presses the + key of the VIDEO PLUS keys 11 in step S22. Then, the user inputs the VIDEO PLUS code by means of the numeric keypad 8 in step S25, and presses the + key of the VIDEO PLUS keys 11 in step S26. Next, the user checks the recording time in step S27 and presses the menu key 10 in step S28, then the standard screen appears again. The VTR is turned off and enters the recording standby status in step S29.

If the user is unfamiliar with the operation for setting programmed recording, the user will press the operation guide key 7 disposed on the remote controller 2B (step S30), guided by the characters "Operation Guide" 7a on the remote controller 2B. When the operation guide key 7 is pressed, the remote controller 2B transfers a command to the optical remote control signal receiving section 2A, and the command is input through the input circuit 3 to the control circuit 4 as an operation guide command. The control circuit 4 controls the display circuit 5 to display the main menu screen (operation guide screen), which is indicated in Fig. 4, on the screen of the monitor 14 of the television set connected to the VTR, for example. Following the guide displayed on the main menu screen, the user can select a function by specifying the corresponding item by means of the numeric keypad 8 of the remote controller 2B.

Following the instructions on the main menu screen displayed on the screen of the monitor 14 of the television receiver by the display circuit 5, which is shown in Fig. 4, the user can select the third item, MAKE A RECORDING LATER (step S31). The third item is selected by pressing the "3" key of the numeric keypad 8 on the remote controller 2B. The item selection command is transferred from the remote controller 2B to the optical remote control signal receiving section 2A, and input through the input circuit 3 to the control circuit 4 as the item selection information. The control circuit 4 controls the display circuit 5 to change the displayed screen to the recording programming screen (MAKE A RECORDING LATER screen), as shown in Fig. 12.

As shown in Fig. 12, the MAKE A RECORDING LATER screen prompts the user to input the VIDEO PLUS code and then press VIDEO PLUS + key, or to press the TIMER-RECORDING PROGRAM key if the VIDEO PLUS code is not known (S33). Following the prompts, the user inputs the VIDEO PLUS code (S25) and then VIDEO PLUS + key (S26) if he knows the VIDEO PLUS code.

If the user does not know the VIDEO PLUS code, he presses the TIMER RECORDING PROGRAM key (S23), and subsequently input the recording time (S24), and checks the recording time (Starting time and end time) (S32).

When the + key of the VIDEO PLUS keys 11 is pressed next (step S26), the remote controller 2B sends a program command through the optical remote control signal receiving section 2A and the input circuit 3. The program command is input to the control circuit 4, which is shown in Fig. 1, and the display circuit 5 is controlled to display the recording period confirmation screen, as shown in Fig. 13. With the screen, the user can check the recording start time and end time (step S27). When the user presses the menu key 10 on the remote controller 2B, which is shown in Fig. 2, following the instructions displayed on the screen, after checking the recording period on the recording period confirmation screen, the recording period confirmation screen disappears (step S28), and the normal screen appears again. The programmed recording is set when the VTR main body is turned off (step S29).

In the above example described, instructions as to the input procedure is given to the user by displaying the guidance information of the menu screen or the like by means of the display circuit 5. Like the second and third embodiments of the input apparatus, the guidance as to the input procedure may be given by means of voice guidance.

With the input apparatus described above, the control information equivalent to that provided by the recording programming function included in the conventional magnetic recording/reproducing apparatus can be correctly input to the recording circuit 6 by selecting the MAKE A RECORDING LATER function from the first menu screen. Therefore, the user familiar with the setting of the recording programming function of the magnetic recording/reproducing apparatus can program recording using the simple VIDEO PLUS code. The user unfamiliar with the operation can securely carries out the input of the VIDEO PLUS code and reach the recording period confirmation screen (Fig. 13) for checking the programmed recording, following the operating instructions and the like displayed on the operation guide screen (Fig. 4) and the recording programming screen (Fig. 12), without reading the operating manual.

### Embodiment 6

The sixth embodiment of the input apparatus is designed to start the record operation upon the first key input operation when a magnetic recording/reproducing apparatus (VTR) connected to a television receiver is set to perform recording with reference to the guide information. Like the first embodiment of the input apparatus, the sixth embodiment of the input apparatus offers two ways for setting the magnetic recording/reproducing apparatus to perform programmed recording.

When the user unfamiliar with the setting of recording records a TV program which the user is watching for 30 minutes with the first embodiment of the input apparatus described above, the user presses the operation guide key 7 and the JOG key 9 to specify the channel number, sets a recording period, then presses the REC key 1. By this operation, the recording circuit 6 is instructed to perform the record operation.

The sixth embodiment of the input apparatus instructs the recording circuit 6 to perform the record operation when a key of the numeric keypad 8 on the remote controller 2B is pressed to select the second item MAKE A RECORDING NOW on the operation guide screen, shown in Fig. 4, after the operation guide key 7 is pressed to select the input procedure using the menu screen. So, even the user unfamiliar with the setting of recording can immediately start the record operation upon the first key input operation when the user wants to immediately record the current program on the currently selected channel.

When a key of the numeric keypad 8 is pressed to start recording, the display circuit 5 displays the recording period setting screen (Fig. 6), which indicates (the number of) the channel on which recording is being performed, and permits the setting of the recording period. When the user presses the REC key 1 after the recording period is set, the recording period is displayed on the recording setting confirmation screen for a few seconds, as shown in Fig. 7. Here, it is assumed that the recording period is 30 minutes. After the recording is performed for 30 minutes from the first operation of the numeric keypad 8, the control circuit 4 turns off the recording circuit 6.

### Embodiment 7

The seventh embodiment of the input apparatus is designed to start the record operation upon the key input operation of a channel number when a magnetic recording/reproducing apparatus (VTR) connected to a television receiver is set to perform recording with reference to the guide information. When the magnetic recording/reproducing apparatus is set to perform programmed recording, the seventh embodiment of the input apparatus offers two ways, like the first embodiment of the input apparatus.

The sixth embodiment of the input apparatus starts the record operation upon the first key input operation, enabling the current program on the currently selected channel to be immediately recorded. The seventh embodiment of the input apparatus instructs the recording circuit 6 to perform record operation after the recording channel is set by means of the JOG keys 9 on the channel number setting screen, shown in Fig. 5. This enables the user unfamiliar with the setting of recording to record a program immediately after specifying a desired channel number.

If the user does not press the JOG keys 9 for a certain period, the apparatus assumes that nothing is input. The screen is changed to the menu screen for setting a recording period (recording period setting screen), which is shown in Fig. 6, and the recording of the current program on the current channel starts.

When the recording is started by the recording circuit 6 having been instructed to perform record operation, the display circuit 5 displays the recording period setting screen, which shows the number of the current recording channel and permits setting of the recording period. When the user presses the REC key 1 after the recording period of for example 30 minutes is set, the recording period is displayed on the recording setting confirmation screen for a few seconds, as shown in Fig. 7. After the recording is performed for 30 minutes from the first operation of the numeric keypad 8, the control circuit 4 turns off the recording circuit 6.

The sixth and seventh embodiments described above guide the user through the input procedure by displaying necessary guide information on the menu screen. Like the second and third embodiments of the input apparatus, the sixth and seventh embodiments may guide the user through the input procedure by means of voice guidance.

The input apparatus of the present invention has been described in terms of the setting of the recording period only. The input apparatus can also set so-called off-timer, which is a playback end time, for example, and can also be used to perform programmed viewing of a television program, and the like.

## Claims

1. A method for inputting control information for operating an audiovisual apparatus which involves the steps of:
allowing a user to choose between a first input means (1) which inputs the control information in a first procedure; and
a second input means (2B) which inputs the control information in a second procedure different from said first procedure wherein,
instructions on a procedure for inputting said control information are output to the user when said second input means (2B) is selected, and
wherein,
the input procedure can be changed from the second procedure to the first procedure when said instructions are output.

2. An input apparatus for inputting control information for operating an audiovisual apparatus, comprising:
an output means (14,15);
a first input means (1) for inputting said control information in a first input procedure; and
a second input means (2B) for inputting said control information in a second input procedure different from said first input procedure;
said output means (14,15) giving instructions on a procedure for inputting said control information when said second input means (2B) is selected, and wherein
the input procedure can be changed from the second procedure to the first procedure when said instructions are output.

3. An input apparatus according to claim 2 wherein said output means is a display means (14) which displays a menu screen when second input means is selected.

4. An input apparatus according to claim 2 wherein said output means is an audio means (15) which outputs voice guidance when second input means is selected.

5. The input apparatus of claim 3 or 4, wherein said display means (14) or audio output means (15) gives instructions on the procedure for inputting said control information by means of said first input means (1) when said second input means (2B) finishes input of said control information.

6. The input apparatus of any of claims 2 to 5, wherein said control information is for setting a video recording/reproducing apparatus to perform recording.

7. The input apparatus of any of claims 2 to 6, wherein said first input means (1) and second input means (2B) are key input devices.

8. The input apparatus of claim 6 or 7, wherein said control information is for preset recording which sets said video recording/reproducing apparatus to perform recording after a certain period of time.

9. The input apparatus of claim 6 or 7, wherein a record operation is started by a first key input operations when said second input means (2B) is selected to input the control information for setting said video recording/reproducing apparatus to perform recording.

10. The input apparatus of claim 6 or 7, wherein a record operation is started by the key input operation of a channel number when said second input means (2B) is selected to input the control information for setting said video recording/reproducing apparatus to perform recording.

## Patentansprüche

1. Verfahren zum Eingeben von Steuerinformationen zum Betätigen einer audiovisuellen Vorrichtung, das die Schritte aufweist:
Ermöglichen einem Benutzer, zwischen einer ersten Eingabevorrichtung (1), die die Steuerinformationen in einer ersten Prozedur eingibt; und
einer zweiten Eingabevorrichtung (2B), die die Steuerinformationen in einer zweiten Prozedur, die gegenüber der ersten Prozedur unterschiedlich ist, eingibt auszuwählen, worin
Befehle für eine Prozedur zum Eingeben der Steuerinformationen zu dem Benutzer ausgegeben werden, wenn die zweite Eingabevorrichtung (2B) ausgewählt ist, und worin
die Eingabeprozedur von der zweiten Prozedur zu der ersten Prozedur geändert werden kann, wenn die Befehle ausgegeben sind.

2. Eingabevorrichtung zum Eingeben von Steuerinformationen zum Betätigen einer audiovisuellen Vorrichtung, welche aufweist:
eine Ausgabevorrichtung (14, 15);
eine erste Eingabevorrichtung (1) zum Eingeben der Steuerinformationen in einer ersten Eingabeprozedur; und
eine zweite Eingabevorrichtung (2B) zum Eingeben der Steuerinformationen in einer zweiten Eingabeprozedur, die sich von der ersten Eingabeprozedur unterscheidet;
wobei die Ausgabevorrichtung (14, 15) Befehle für eine Prozedur zum Eingeben der Steuerinformationen gibt, wenn die zweite Eingabevorrichtung (2B) ausgewählt ist, und worin
die Eingabeprozedur von der zweiten Prozedur zu der ersten Prozedur geändert werden kann, wenn die Befehle ausgegeben sind.

3. Eingabevorrichtung nach Anspruch 2, bei der die Ausgabevorrichtung eine Anzeigevorrichtung (14) ist, die einen Menüschirm darstellt, wenn die zweite Eingabevorrichtung ausgewählt ist.

4. Eingabevorrichtung nach Anspruch 2, worin die Ausgabevorrichtung eine Audiovorrichtung (15) ist, die eine Sprachführung ausgibt, wenn die zweite Eingabevorrichtung ausgewählt ist.

5. Eingabevorrichtung nach Anspruch 3 oder 4, worin die Anzeigevorrichtung (14) oder die Audioausgabevorrichtung (15) Befehle für die Prozedur zum Eingeben der Steuerinformationen mittels der ersten Eingabevorrichtung (1) gibt, wenn die zweite Eingabevorrichtung (2B) die Eingabe der Steuerinformationen beendet.

6. Eingabevorrichtung nach einem der Ansprüche 2 bis 5, bei der die Steuerinformationen zum Einstellen einer Videoaufzeichnungs-/-wiedergabevorrichtung für die Durchführung einer Aufzeichnung vorgesehen sind.

7. Eingabevorrichtung nach einem der Ansprüche 2 bis 6, worin die erste Eingabevorrichtung (1) und die zweite Eingabevorrichtung (2B) Tasteneingabevorrichtungen sind.

8. Eingabevorrichtung nach Anspruch 6 oder 7, bei der die Steuerinformationen zum Voreinstellen der Aufzeichnung vorgesehen sind, welche die Videoaufzeichnungs-/-wiedergabevorrichtung für die Durchführung einer Aufzeichnung nach einer bestimmten Zeitperiode einstellt.

9. Eingabevorrichtung nach Anspruch 6 oder 7, bei der ein Aufzeichnungsvorgang durch eine erste Tasteneingabeoperation gestartet wird, wenn die zweite Eingabevorrichtung (2B) ausgewählt ist, um Steuerinformationen zum Einstellen der Videoaufzeichnungs-/-wiedergabevorrichtung für die Durchführung der Aufzeichnung einzugeben.

10. Eingabevorrichtung nach Anspruch 6 oder 7, bei der ein Aufzeichnungsvorgang durch die Tasteneingabeoperation einer Kanalnummer gestartet wird, wenn die zweite Eingabevorrichtung (2B) ausgewählt ist, um die Steuerinformationen zum Einstellen der Videoaufzeichnungs-/-wiedergabevorrichtung für die Durchführung der Aufzeichnung einzugeben.

## Revendications

1. Procédé pour entrer des informations de commande pour faire fonctionner un appareil audiovisuel qui comprend les étapes consistant à :
permettre à un utilisateur de choisir entre un premier moyen d'entrée (1) qui entre les informations de commande dans une première procédure, et un deuxième moyen d'entrée (2B) qui entre les informations de commande dans une deuxième procédure, différente de ladite première procédure,
dans lequel les instructions sur une procédure pour entrer lesdites informations de commande sont délivrées à l'utilisateur quand ledit deuxième moyen d'entrée (2B) est choisi, et
dans lequel il est possible, pour la procédure d'entrée, de passer de la deuxième procédure à la première procédure quand lesdites instructions sont délivrées.

2. Dispositif d'entrée pour entrer des informations de commande pour faire fonctionner un appareil audiovisuel, comprenant :
un moyen de sortie (14, 15) ;
un premier moyen d'entrée (1) pour entrer lesdites informations de commande dans une première procédure d'entrée ; et
un deuxième moyen d'entrée (2B) pour entrer lesdites informations de commande dans une deuxième procédure d'entrée différente de ladite première procédure d'entrée ;
ledit moyen de sortie (14, 15) donnant des instructions sur une procédure pour entrer lesdites informations de commande quand ledit deuxième moyen d'entrée (2B) est choisi, et
dans lequel il est possible, pour la procédure d'entrée, de passer de la deuxième procédure à la première procédure quand lesdites instructions sont délivrées.

3. Dispositif d'entrée selon la revendication 2, dans lequel ledit moyen de sortie est un moyen d'affichage (14) qui affiche un écran de menu quand ledit deuxième moyen d'entrée est choisi.

4. Dispositif d'entrée selon la revendication 2, dans lequel ledit moyen de sortie est un moyen audio (15) qui délivre un guidage vocal quand ledit deuxième moyen d'entrée est choisi.

5. Dispositif d'entrée selon la revendication 3 ou 4, dans lequel ledit moyen d'affichage (14) ou moyen audio (15) donne des instructions sur la procédure pour entrer lesdites informations de commande à l'aide dudit premier moyen d'entrée (1) quand ledit deuxième moyen d'entrée (2B) termine l'entrée desdites informations de commande.

6. Dispositif d'entrée selon l'une quelconque des revendications 2 à 5, dans lequel lesdites informations de commande servent à régler un appareil d'enregistrement/lecture vidéo pour effectuer un enregistrement.

7. Dispositif d'entrée selon l'une quelconque des revendications 2 à 6, dans lequel ledit premier moyen d'entrée (1) et ledit deuxième moyen d'entrée (2B) sont des dispositifs d'entrée à touches.

8. Dispositif d'entrée selon la revendication 6 ou 7, dans lequel lesdites informations de commande servent à un enregistrement préréglé qui règle ledit appareil d'enregistrement/lecture vidéo pour effectuer un enregistrement après un certain laps de temps.

9. Dispositif d'entrée selon la revendication 6 ou 7, dans lequel une opération d'enregistrement est démarrée par des opérations d'entrée d'une première touche quand ledit deuxième moyen d'entrée (2B) est choisi pour entrer les informations de commande pour régler ledit appareil d'enregistrement/lecture vidéo pour effectuer un enregistrement.

10. Dispositif d'entrée selon la revendication 6 ou 7, dans lequel une opération d'enregistrement est démarrée par l'opération d'entrée de touche d'un numéro de chaîne quand ledit deuxième moyen d'entrée (2B) est choisi pour entrer les informations de commande pour régler ledit appareil d'enregistrement/lecture vidéo pour effectuer un enregistrement.
